# EUROPÄISCHE PATENTSCHRIFT

(11) **EP 3 801 966 B1**
(45) Veröffentlichungstag und Bekanntmachung des Hinweises auf die Patenterteilung: **13.09.2023**
(21) Anmeldenummer: 19726361.9
(22) Anmeldetag: 21.05.2019
(51) Int. Cl.: B21F 15/08, B21F 27/10, E04C 5/06, B23K 9/16, B23K 11/00, B23K 11/11, B23K 101/22, B21F 27/12, B23K 28/02, B23K 9/00

(54) **KORBSCHWEISSMASCHINE ZUR HERSTELLUNG EINES BEWEHRUNGSKÖRPERS**
CAGE WELDING MACHINE FOR PRODUCING A REINFORCEMENT ELEMENT
CAGEUSE POUR LA FABRICATION D'UN CORPS D'ARMATURE

(30) Priorität: 30.05.2018 DE 102018112925
(43) Veröffentlichungstag der Anmeldung: 14.04.2021
(73) Patentinhaber: MBK MASCHINENBAU GmbH, D-88353 Kisslegg (DE)
(72) Erfinder: LEHMANN, Jens, 88326 Aulendorf (DE)
(74) Vertreter: Otten, Roth, Dobler & Partner mbB Patentanwälte
(86) Internationale Anmeldenummer: PCT/EP2019/063030
(87) Internationale Veröffentlichungsnummer: WO 2019/228845

(56) Entgegenhaltungen:
- WO-A1-2017/067857
- AT-B1- 508 093
- DE-A1- 2 631 501
- DE-A1-102012 015 241
- DE-A1-102015 105 865
- US-A- 4 911 209

## Beschreibung

Die Erfindung betrifft eine Korbschweißmaschine zur Herstellung eines Bewehrungskörpers.

### Stand der Technik

Korbschweißmaschinen zum Erstellen eines Bewehrungskörpers der einleitend bezeichneten Art sind beispielsweise aus der DE 26 31 501 A1, welche die Basis für den Oberbegriff von Anspruch 1 bildet, bereits bekannt. Eine bekannte Korbschweißmaschine ist zur Herstellung eines rohrförmigen Bewehrungskörpers für z.B. Betonrohre ausgebildet, wobei die Korbschweißmaschine einen Winkeldraht, welcher sich schraubenförmig um Längsdrähte des Bewehrungskörpers erstreckt, an einer Kreuzungsstelle des Wickeldrahts und des Längsdrahts mittels eines Schweißverfahrens mit einem Längsdraht verschweißt. Die bekannte Korbschweißmaschine umfasst zum Verschweißen des Wickeldrahts mit dem Längsdraht eine Widerstandsschweißanlage, wodurch vergleichsweise geringe Zykluszeiten realisiert sind.

Nachteilig daran ist, dass durch das Widerstandsschweißen des Wickeldrahts mit dem Längsdraht Material des Wickeldrahts an der Fügestelle bzw. Schweißstelle verschwindet, wodurch eine Stabilität des Bewehrungskörpers an dieser Stelle geschwächt ist. Auch kann ein vergleichsweise dicker Längsdraht mittels Widerstandsschweißen nicht mit einem Wickeldraht verbunden werden, wobei die heutigen statischen Anforderungen an Bewehrungskörper steigen und deshalb ein Einsatz derartig ausgebildeter, vergleichsweise dicker Längsdrähte in einem Bewehrungskorb notwendig werden kann.

### Aufgabe und Vorteile der Erfindung

Aufgabe der vorliegenden Erfindung ist es, eine verbesserte Korbschweißmaschine bereitzustellen, insbesondere eine z.B. bekannte Korbschweißmaschine flexibler auszubilden, insbesondere derart, dass auch vergleichsweise dicke Drähte und/oder Stäbe vergleichsweise schnell und insbesondere automatisch miteinander verbindbar sind.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Korbschweißmaschine zur Herstellung eines Bewehrungskörpers aus.

Erfindungsgemäß ist die Korbschweißmaschine zur Herstellung eines Bewehrungskörpers ausgebildet, wobei der Bewehrungskörper eine Mehrzahl von , Längsstäben, und einen Wickeldraht aufweist. Erfindungsgemäß ist die Korbschweißmaschine dazu ausgebildet, die Längsstäbe mit dem Wickeldraht zu verbinden. Denkbar ist auch, dass zwei, drei oder mehr Wickeldrähte am Bewehrungskörper vorgesehen sind. Erfindungsgemäß ist die Korbschweißmaschine ausgebildet, eine zentrale Längsachse vorzugeben, entlang derer die Längsstäbe bei der Herstellung des Bewehrungskörpers durch die Korbschweißmaschine in eine Förderrichtung bewegt werden.

Vorteilhafterweise werden die Längsstäbe durch die Korbschweißmaschine während der Herstellung insbesondere zeitgleich um die zentrale Längsachse bewegt, insbesondere gedreht. Die Längsstäbe geben vorteilhafterweise eine Länge des Bewehrungskörpers vor. Vorteilhafterweise ist die Korbschweißmaschine derart ausgebildet, dass sie Längsstäbe, insbesondere alle Längsstäbe vorteilhafterweise mit einer gleichen Beschleunigung und/oder einer gleichen Geschwindigkeit, bewegt und/oder dreht.

Erfindungsgemäß weist die Korbschweißmaschine ein Gestell auf, welches dazu ausgebildet ist, einen Abstand eines Längsstabs relativ zur Längsachse vorzugeben. Das Gestell ist weiter dazu ausgebildet, einen insbesondere radialen Abstand eines Längsdrahts relativ zur Längsachse vorzugeben. Denkbar ist weiterhin, dass das Gestell dazu ausgebildet ist, dass ein bspw. radialer Abstand eines Längsdrahts zur Längsachse insbesondere während eines Herstellungsvorgangs des Bewehrungskörpers veränderlich ist. Beispielsweise ist das Gestell dazu ausgebildet, dass ein Bewehrungskörper herstellbar ist, welcher Längsstäbe aufweist, welche verschiedene insbesondere radiale Abstände zur Längsachse des Bewehrungskörpers aufweisen. Hierdurch ist beispielsweise ein Bewehrungskörper mit einem ovalen Querschnitt herstellbar. Denkbar ist auch, dass die Korbschweißmaschine, insbesondere das Gestell, dazu ausgebildet ist, dass ein Bewehrungskörper herstellbar ist, welcher entlang seiner Längsachse verschiedene Querschnitte aufweist. Beispielsweise ist ein radialer Abstand eines Längsdrahts zur Längsachse zu einem weiteren radialen Abstand des gleichen Längsdrahts zur Längsachse entlang der Längsachse des Bewehrungskörpers bzw. entlang einer Erstreckung des Bewehrungskörpers verschieden.

Der Draht des Bewehrungskörpers ist beispielsweise um die Längsstäbe insbesondere spiralförmig gewickelt. Zum Beispiel ist die Korbschweißmaschine dazu ausgebildet, den Draht um die Stäbe zu wickeln. Vorstellbar ist auch, dass die Korbschweißmaschine dazu ausgebildet ist, den Draht in einer Ebene quer, insbesondere senkrecht, zur Längserstreckung des Bewehrungskörpers am Bewehrungskörper anzuordnen. Beispielsweise ist die Korbschweißmaschine dazu ausgebildet, den Draht kreisförmig am Bewehrungskörper anzuordnen.

Der Bewehrungskörper ist z.B. als eine Bewehrung eines Rohrs, eines Pfahls, einer Stütze und/oder eines Pfeilers ausgebildet. Der Bewehrungskörper ist beispielsweise in einem Querschnitt, insbesondere quer zu einer Längserstreckung eines Stabs gesehen, rechteckig, quadratisch, mehr- oder vieleckig, rund und/oder oval ausgebildet.

Die Korbschweißmaschine ist beispielsweise als eine Pfahl-Bewehrungskorb-Schweißmaschine oder ein Pfeiler-Bewehrungskorb-Schweißmaschine oder als eine Rohr-Bewehrungskorb-Schweißmaschine bzw. als eine Bewehrungsrohrschweißmaschine ausgebildet. Denkbar ist auch, dass mit der vorgeschlagenen Korbschweißmaschine ein Bewehrungsmattenkorb, z.B. eine 3-dimensionale Bewehrungsmatte, herstellbar ist.

Vorteilhafterweise umfasst ein Längsstab, bzw. Stab einen größeren Durchmesser als der Draht. Denkbar ist auch, dass der Durchmesser eines Drahts und der Durchmesser des Stabs gleich oder zumindest ähnlich ausgebildet sind. Der Stabdurchmesser liegt beispielsweise in einem Bereich zwischen 5mm und 60mm. Z.B. ist der Stabdurchmesser etwa 20mm, 25mm, 30mm, 35mm, 40mm, 45mm, 50mm, 55mm oder etwa 60mm. Denkbar ist auch, dass die Durchmesser von zwei oder mehr Stäben des Bewehrungskörpers verschieden sind. Der Wickeldrahtdurchmesser ist beispielsweise zwischen 1mm und 20mm, insbesondere zwischen 2mm und 15mm. Beispielsweise ist der Wickeldrahtdurchmesser etwa 4mm, 5mm, 6mm, 7mm, 8mm, 9 mm, 10mm, 11mm, 12mm, 13mm, 14mm oder etwa 15mm. Umfasst der Bewehrungskörper mehrere Wickeldrähte, so ist es denkbar, dass die Wickeldrähte einen gleichen Durchmesser aufweisen oder verschiedene Durchmesser umfassen.

Der Kern der Erfindung ist darin zu sehen, dass die Korbschweißmaschine eine Widerstandsschweißanlage und eine Schutzgasschweißanlage umfasst, wobei beide Anlagen dazu ausgebildet sind, einen Draht und einen Stab eines Bewehrungskörpers miteinander zu verbinden. Hierdurch sind vergleichsweise dicke Stäbe und/oder vergleichsweise dicke Drähte miteinander verbindbar, bei insbesondere vergleichsweise schneller Herstellgeschwindigkeit. Außerdem ist hierdurch eine Flexibilität in der Verbindungsqualität von Elementen des Bewehrungskörpers erhöht.

Die Schutzgasschweißanlage ist vorteilhafterweise als eine Metall-Inertgas-Schweißanlage (MIG-Schweißanlage) und/oder als eine Wolfram-Inertgas-Schweißanlage (WIG-Schweißanlage) ausgebildet. Denkbar ist auch, dass die Schutzgasschweißanlage als eine Plasmaschweißanlage vorhanden ist.

Weiter wird vorgeschlagen, dass die Korbschweißmaschine derart ausgebildet ist, dass mit der Widerstandsschweißanlage und mit der Schutzgasschweißanlage zeitgleich ein Draht mit einem Stab des herzustellenden Bewehrungskörpers verbindbar ist. Hierdurch ist eine Herstellung des Bewehrungskörpers, insbesondere des Bewehrungskorbs, durch die Korbschweißmaschine vergleichsweise beschleunigt. Vorteilhafterweise ist ein gleicher Draht mit verschiedenen Stäben durch die Widerstandsschweißanlage und die Schutzgasschweißanlage zeitgleich verbindbar. Denkbar ist auch, dass der gleiche Draht mit einem Stab an insbesondere unterschiedlichen Positionen, insbesondere unterschiedlichen Fügestellen, zeitgleich durch die Widerstandsschweißanlage und die Schutzgasschweißanlage verbindbar ist. Vorstellbar ist auch umgekehrt, dass zwei verschiedene Stäbe mit insbesondere zwei unterschiedlichen Drähten an insbesondere unterschiedlichen Positionen bzw. Fügestellen zeitgleich durch die Widerstandsschweißanlage und die Schutzgasschweißanlage verbindbar sind.

In der vorliegenden Anmeldung wird bei Nennung des Begriffs "Fügestelle" des Bewehrungskörpers insbesondere nicht zwischen einer noch durch eine der Schweißanlagen zu fügenden Stelle des Bewehrungskörpers oder einer schon gefügten Stelle des Bewehrungskörpers unterschieden. Bei einem mittels der vorgeschlagenen Korbschweißmaschine hergestelltem Bewehrungskörpers sind vorteilhafterweise alle Fügestellen mittels der Schweißanlagen der Korbschweißmaschine bearbeitet und die entsprechenden Elemente, wie Stab und Draht miteinander verbunden, z.B. geschweißt.

Beispielsweise ist die Korbschweißmaschine derart vorhanden, dass die Widerstandsschweißanlage einen Draht mit einem ersten Stab an einer ersten Position des Bewehrungskorbs fügen, z.B. schweißen kann und insbesondere zeitgleich die Schutzgasschweißanlage einen insbesondere gleichen Draht mit einem weiteren Stab an einer zweiten Position des Bewehrungskörpers fügen, z.B. schweißen kann. Denkbar ist auch, dass die Korbschweißmaschine derart vorhanden ist, dass die Widerstandsschweißanlage und die Schutzgasschweißanlage insbesondere nacheinander einen gleichen Draht und einen gleichen Stab an einer gleichen Position, insbesondere einer gleichen Fügestelle, des Bewehrungskorbs fügen, z.B. schweißen können. Beispielsweise ist es denkbar, dass die Korbschweißmaschine dazu ausgebildet ist, eine Schweißverbindung zwischen einem Draht und einem Stab mittels der Widerstandsschweißanlage zu beginnen, z.B. den Draht und den Stab an einer Schweißposition bzw. Fügestelle der Schweißverbindung mittels der Widerstandsschweißanlage zu erhitzen, und die Schweißverbindung bzw. Fügeverbindung mittels der Schutzgasschweißanlage fertigzustellen, z.B. den Draht und den Stab an der Schweißposition bzw. der Fügestelle der Schweißverbindung bzw. Fügeverbindung mittels der Schutzgasschweißanlage zu verbinden bzw. zu fügen. Hierdurch ist vorteilhafterweise eine Herstellungszeit, reduziert.

Auch ist es von Vorteil, dass in eine Bewegungsrichtung eines Drahts und/oder in eine Bewegungsrichtung eines Stabs gesehen, die Schutzgasschweißanlage hinter der Widerstandsschweißanlage an der Korbschweißmaschine angeordnet ist. Beispielsweise ist die Widerstandsschweißanlage, insbesondere ein Schweißkopf der Widerstandsschweißanlage, in Vorschubrichtung der Längsstäbe gesehen, zwischen dem Gestell und der Schutzgasschweißanlage, insbesondere zwischen dem Gestell und einem Schweißkopf der Schutzgasschweißanlage, vorhanden. Bevorzugterweise ist in eine Bewegungsrichtung des Bewehrungskörpers gesehen die Schutzgasschweißanlage, insbesondere der Schweißkopf der Schutzgasschweißanlage hinter der Widerstandsschweißanlage, insbesondere hinter dem Schweißkopf der Widerstandsschweißanlage, an der Korbschweißmaschine angeordnet. Beispielsweise passiert eine zu bearbeitende, insbesondere zu schweißende Position, z.B. der Fügestelle, in der Bewegung des Drahts und/oder in der Bewegung des Stabs zunächst die Widerstandsschweißanlage, insbesondere einen Schweißkopf der Widerstandsschweißanlage, und beispielsweise zeitlich anschließend die Schutzgasschweißanlage, insbesondere den Schweißkopf der Schutzgasschweißanlage. Vorteilhafterweise ist hierdurch eine Nachführung der Schutzgasschweißanlage, insbesondere des Schutzgasschweißkopfs der Schutzgasschweißanlage an eine insbesondere zu schweißenden Position am Bewehrungskörper realisierbar.

Vorteilhafterweise ist in eine Bewegungsrichtung eines Drahts, insbesondere in eine Vorschubrichtung eines Drahts, und/oder in eine Bewegungsrichtung eines Stabs, insbesondere in eine Drehrichtung eines Stabs und/oder in Vorschubrichtung des Stabs, gesehen, der Schweißkopf der Schutzgasschweißanlage, insbesondere eine Fügeposition des Schweißkopfs der Schutzgasschweißanlage, hinter dem Schweißkopf der Widerstandsschweißanlage, insbesondere hinter einer Fügeposition des Schweißkopfs der Widerstandsschweißanlage, an der Korbschweißmaschine angeordnet. Vorteilhafterweise sind die Schweißköpfe der Schweißanlagen, insbesondere die Fügepositionen der Schweißköpfe in einer Ebene quer zu einer Vorschubrichtung, insbesondere quer, beispielsweise senkrecht zur Förderrichtung des Stabs gesehen nebeneinander angeordnet. Beispielsweise sind die Fügepositionen der Schweißköpfe der Schutzgasschweißanlage und der Widerstandsschweißanlage in einer Längserstreckung der Längsstäbe gesehen um mindestens eine Dicke bzw. einen Durchmesser eines Wickeldrahts voneinander beabstandet vorhanden.

Vorteilhafterweise ist der Schweißkopf der Widerstandsschweißanlagen, insbesondere die Fügeposition des Schweißkopfs der Widerstandsschweißanlage, in einer ersten Ebene, welche sich quer zu einer Vorschubrichtung der Korbschweißmaschine erstreckt, welche insbesondere quer zur Förderrichtung eines Stabs sich erstreckend vorhanden ist, angeordnet. Beispielsweise ist der Schweißkopf der Schutzgasschweißanlage, insbesondere die Fügeposition des Schweißkopfs der Schutzgasschweißanlage, in einer zweiten Ebene, welche sich quer zu der Vorschubrichtung erstreckt, welche insbesondere quer zur Förderrichtung des Stabs sich erstreckend vorhanden ist, ausgebildet. Bevorzugterweise befindet sich die erste Ebene in Vorschubrichtung, insbesondere in Förderrichtung, des Stabs gesehen hinter der zweiten Ebene. Beispielsweise ist die erste Ebene zwischen dem Gestell und der zweiten Ebene vorhanden.

Außerdem wird vorgeschlagen, dass die Schutzgasschweißanlage und die Widerstandsschweißanlage derart an der Korbschweißmaschine angeordnet sind, dass eine zu bearbeitende Position des Bewehrungskörpers, z.B. eine Fügestelle, zunächst durch die Widerstandsschweißanlage bearbeitbar ist und nachfolgend durch die Schutzgasschweißanlage. Hierdurch ist beispielsweise zunächst eine Bewehrungskörperkonfiguration, z.B. eine Körpergeometrie des Bewehrungskörpers, durch ein Verbinden von Draht und Stab des Bewehrungskörpers mittels der Widerstandsschweißanlage festlegbar und/oder die zu bearbeitende Position des Bewehrungskörpers mittels der Widerstandsschweißanlage, insbesondere für ein nachfolgendes Schutzgasschweißen, erwärmbar. Wodurch vorteilhafterweise eine Fügezeit, insbesondere eine Schweißzeit vergleichsweise reduziert bzw. verkürzt ist. Außerdem ist hierdurch die Korbschweißmaschine, insbesondere die Anordnung der Schutzgasschweißanlage und der Widerstandsschweißanlage, insbesondere der Schweißköpfe, vergleichsweise kompakt realisierbar.

Weiter ist es von Vorteil, dass die Korbschweißmaschine Bewegungsmittel umfasst, sodass der Schweißkopf der Schutzgasschweißanlage und/oder der Schweißkopf der Widerstandsschweißanlage einer Bewegung des Drahts und/oder einer Bewegung des Stabs des herzustellenden Bewehrungskörpers, insbesondere einer Fügestelle des Bewehrungskörpers folgen kann. Hierdurch ist beispielsweise ein Draht und Stab mit vergleichsweise großen Durchmessern mittels der Schutzgasschweißanlage bei vergleichsweise geringer Herstellungszeit des Bewehrungskörpers verbindbar, da die Schutzgasschweißanlage dazu ausgebildet ist, während des Fügevorgangs der Fügestelle zu folgen, womit eine Vorschubbewegung der Längsstäbe zum Fügen durch die Schutzgasscheißanlage nicht angehalten werden muss.

Vorteilhafterweise sind an der Korbschweißmaschine und/oder am Schweißkopf der Schutzgasschweißanlage Bewegungsmittel vorhanden. Die Bewegungsmittel sind bevorzugterweise derart ausgebildet, den Schweißkopf einer Bewegung einer Fügestelle eines herzustellenden Bewehrungskörpers, insbesondere einer Bewegung eines Drahts und/oder eines Stabs des herzustellenden Bewehrungskörpers, nachzuführen. Beispielsweise sind die Bewegungsmittel dazu ausgebildet, den Schweißkopf einer Bewegung einer zu bearbeitenden Position des Bewehrungskörpers, insbesondere der Fügestelle, nachzuführen.

Beispielsweise umfasst die Korbschweißmaschine eine Steuerungseinheit, um Fügevorgänge der Schweißanlagen und/oder Bewegungen der Schweißanlagen zu Regeln bzw. zu Steuern. Vorteilhafterweise umfasst die Steuerungseinheit unter anderem eine Kontrolleinheit und ein Sensorelement, z.B. zur Detektion einer Fügestelle des Bewehrungskörpers und/oder zur Detektion einer Fügeposition eines Schweißkopfs der Schweißanlagen.

In einer vorteilhaften Ausbildung weist die Schutzgasschweißanlage ein Mitnehmerorgan auf, wobei die Schutzgasschweißanlage zum Verbinden von zwei Elementen des Bewehrungskörpers mit dem Mitnehmerorgan an einem Stab und/oder einem Draht, insbesondere einem Längsstab ansteht, sodass eine Bewegung des Stabs und/oder des Drahts eine Bewegung des Mitnehmerorgans und damit beispielsweise eine Bewegung des Schweißkopfs bewirkt. Hierdurch ist ein Nachführen des Schweißkopfs der Schutzgasschweißanlage vergleichsweise einfach und zuverlässig realisiert.

Vorteilhafterweise bewegt der Stab, insbesondere der Längsstab, das Mitnehmerorgan, beispielsweise zusammen mit dem Schweißkopf der Schutzgasschweißanlage, um die zentrale Längsachse der Korbschweißmaschine. Beispielsweise bewegt der Stab das Mitnehmerorgan, beispielsweise zusammen mit dem Schweißkopf der Schutzgasschweißanlage, auf einer Kreisbahn um die zentrale Längsachse der Korbschweißmaschine. Beispielsweise bildet die zentrale Längsachse einen Mittelpunkt der Kreisbahn des Mitnehmerorgans, während das Mitnehmerorgan durch den Stab um die Längsachse bewegt wird. Beispielsweise bewirkt eine Drehbewegung des Stabs, insbesondere des Längsstabs eine Bewegung des Mitnehmerorgans. Beispielsweise bewegt der Draht das Mitnehmerorgan, beispielsweise zusammen mit dem Schweißkopf der Schutzgasschweißanlage, in Richtung einer Vorschubrichtung des Drahts entlang der zentralen Längsachse der Korbschweißmaschine bzw. der Längsachse des herzustellenden Bewehrungskörpers. Hierdurch erfährt der Schweißkopf der Schutzgasschweißanlage vorteilhafterweise eine überlagerte Bewegung, welche beispielsweise spiralartig ausgestaltet ist. Beispielsweise bewegt sich der Schweißkopf der Schutzgasschweißanlage, insbesondere die Fügeposition des Schweißkopfs der Schutzgasschweißanlage entlang einer Kreisbahn, entlang einer Spirale oder entlang einer Ellipse.

Das Mitnehmerorgan ist bevorzugterweise beweglich, insbesondere linearbeweglich, an der Schutzgasschweißanlage, insbesondere am Schweißkopf der Schutzgasschweißanlage vorhanden. Hierdurch ist ein Koppeln und/oder ein Entkoppeln des Mitnehmerorgans mit dem Stab realisierbar. Beispielsweise ist das Mitnehmerorgan mittels einer Antriebseinheit der Schutzgasschweißanlage bewegbar vorhanden. Die Antriebseinheit ist beispielweise pneumatisch oder hydraulisch angetrieben.

Ebenfalls erweist es sich von Vorteil, dass die Schutzgasschweißanlage in alle drei Raumrichtungen bewegbar an der Korbschweißmaschine gelagert ist. Beispielweise ist der Schweißkopf der Schutzgasschweißanlage in alle drei Raumrichtungen bewegbar an der Korbschweißmaschine gelagert, insbesondere durch die Bewegungsmittel bewegbar. Denkbar ist auch, dass der Schweißkopf der Schutzgasschweißanlage in genau zwei Raumrichtungen bewegbar gelagert ist. Beispielsweise ist der Schweißkopf der Schutzgasschweißanlage in genau zwei Raumrichtungen jeweils linearbeweglich an der Korbschweißmaschine gelagert, beispielsweise mittels zweier Linearachsen.

Vorstellbar ist beispielsweise, dass der Schweißkopf der Schutzgasschweißanlage entlang zweier Linearachsen, welche quer, insbesondere senkrecht, zueinander vorhanden sind, beweglich, insbesondere linearbeweglich vorhanden ist. Vorteilhafterweise ist der Schweißkopf in jede Raumrichtung einzeln, insbesondere separat, bewegbar gelagert, z.B. linearbeweglich. Beispielsweise ist der Schweißkopf entlang einer Kreisbahn beweglich geführt an der Korbschweißmaschine angeordnet, wobei die Kreisbahn einen Mittelpunkt aufweist, welcher beispielsweise mit der zentralen Längsachse der Korbschweißmaschine zusammenfällt. Von Vorteil erweist sich auch, dass der Schweißkopf der Schutzgasschweißanlage, derart beweglich, insbesondere derart positionierbar, vorhanden ist, dass der Schweißkopf entlang einer Steigung eines Drahts des Bewehrungskörpers ausrichtbar, beispielsweise positionierbar ist. Beispielsweise ist der Schweißkopf der Schutzgasschweißanlage in einer Richtung quer, insbesondere senkrecht zu einer zentralen Längsachse der Korbschweißmaschine und/oder einer Längserstreckung eines Stabs, insbesondere eines Längsstabs des Bewehrungskörpers schwenkbar, z.B. drehbar gelagert.

In einer vorteilhaften Modifikation der Korbschweißmaschine ist ein Bewegungsmittel als ein Roboterarm vorhanden, wobei der Roboterarm dazu ausgebildet ist, einen Schweißkopf der Schutzgasschweißanlage einer Bewegung einer Fügestelle, insbesondere einer Bewegung des Drahts und/oder des Stabs des herzustellenden Bewehrungskörpers nachzuführen. Vorteilhafterweise ist an einem Ende des Roboterarms der Schweißkopf der Schutzgasschweißanlage angeordnet. Hierdurch ist eine vergleichsweise größtmögliche Bewegungsfreiheit des Schweißkopfs der Schutzgasschweißanlage realisierbar.

Von Vorteil erweist sich auch, dass der Schweißkopf der Widerstandsschweißanlage in Förderrichtung gesehen auf ca. 3 Uhr oder auf ca. 9 Uhr um die Längsachse herum an der Korbschweißmaschine angeordnet ist. Z.B. ist der Schweißkopf der Widerstandsschweißanlage insbesondere die Fügeposition des Schweißkopfs der Widerstandsschweißanlage in Förderrichtung gesehen auf ca. 3 Uhr bzw. auf ca. 90° oder auf ca. 9 Uhr bzw. auf ca. 270° um die Längsachse herum an der Korbschweißmaschine angeordnet. Die Gradangaben beziehen sich hierbei auf eine Ausbildung eines Einheitskreises, welcher sich um die zentrale Förderachse der Korbschweißmaschine erstreckt. Eine 0° bzw. 360° Position des Einheitskreis ist vorteilhafterweise am Gestell oben und eine 180° Position am Gestell unten.

Vorteilhafterweise ist der Schweißkopf der Widerstandsschweißanlage insbesondere die Fügeposition des Schweißkopfs der Widerstandsschweißanlage in Förderrichtung gesehen in einem Bereich zwischen +25° und -25° um die Position 90° bzw. 270° um die Längsachse herum an der Korbschweißmaschine ausgebildet. Beispielsweise ist der Schweißkopf der Widerstandsschweißanlage insbesondere die Fügeposition des Schweißkopfs der Widerstandsschweißanlage in einem Bereich zwischen +20° und -20°, zwischen +15° und -15°, zwischen +10° und -10° oder zwischen +5° und -5° in Förderrichtung gesehen um die Position 90° bzw. 270° um die Längsachse herum an der Korbschweißmaschine vorhanden.

Weiter wird vorgeschlagen, dass der Schweißkopf der Schutzgasschweißanlage, insbesondere die Fügeposition des Schweißkopfs der Schutzgasschweißanlage, in Förderrichtung gesehen zwischen 3 Uhr und 12 Uhr oder zwischen 9 Uhr und 12 Uhr um die Längsachse herum an der Korbschweißmaschine angeordnet ist. Z.B. ist der Schweißkopf der Schutzgasschweißanlage insbesondere die Fügeposition des Schweißkopfs der Schutzgasschweißanlage in Förderrichtung gesehen auf ca. 45° bzw. auf ca. 315° um die Längsachse herum an der Korbschweißmaschine angeordnet.

Vorteilhafterweise ist der Schweißkopf der Schutzgasschweißanlage insbesondere die Fügeposition des Schweißkopfs der Schutzgasschweißanlage in Förderrichtung gesehen in einem Bereich zwischen +45° und -45° um die Position 45° bzw. 315° um die Längsachse herum an der Korbschweißmaschine ausgebildet. Beispielsweise ist der Schweißkopf der Schutzgasschweißanlage insbesondere die Fügeposition des Schweißkopfs der Schutzgasschweißanlage in einem Bereich zwischen +40° und -40°, zwischen +35° und -35°, zwischen +30° und -30°, zwischen +25° und -25°, zwischen +20° und -20°, zwischen +15° und -15°, zwischen +10° und -10° oder zwischen +5° und -5° in Förderrichtung gesehen um die Position 45° bzw. 315° um die Längsachse herum an der Korbschweißmaschine vorhanden. Ein Abstand der Schweißköpfe der Widerstandsschweißanlage und der Schutzgasschweißanlage, insbesondere der Fügepositionen der Schweißköpfe der beiden Schweißanlagen um die Längsachse herum beträgt z.B. zwischen 10° und 90°°, zwischen 20° und 70°, zwischen 20° und 60°, zwischen 25° und 55° oder zwischen 35° und 55°. Vorteilhafterweise beträgt ein Abstand etwa 30°, 35°, 40°, 45°, 50°, 55° oder etwa 60°.

### Beschreibung eines Ausführungsbeispiels

Ein Ausführungsbeispiel wird anhand der nachstehenden schematischen Zeichnungen unter Angabe weiterer Einzelheiten und Vorteile näher erläutert.

Es zeigen:
- Figur 1: ein Gestell einer erfindungsgemäßen Korbschweißmaschine mit angeordneter Widerstandsschweißanlage und Schutzgasschweißanlage in einer perspektivischen Sicht von seitlich hinten oben,
- Figur 2: ein vergrößert dargestellter Teilausschnitt der Korbschweißmaschine aus Figur 1,
- Figur 3: eine perspektivische erste Ansicht auf Bewegungsmittel mit daran angeordnetem Schweißkopf der Schutzgasschweißanlage,
- Figur 4: eine perspektivische zweiten Ansicht der Bewegungsmittel mit daran angeordnetem Schweißkopf der Schutzgasschweißanlage,
- Figur 5: eine perspektivische Ansicht auf Teile der Bewegungsmittel gemäß Figur 4 mit daran angeordnetem Schweißkopf der Schutzgasschweißanlage,
- Figur 6: eine weitere perspektivische Ansicht auf Teile der Bewegungsmittel gemäß Figur 3 mit daran angeordnetem Schweißkopf der Schutzgasschweißanlage,
- Figuren 7: eine Seitenansicht in Längserstreckung eines Längsstabs eines herzustellenden Bewehrungskörpers gesehen auf Bewegungsmittel mit daran angeordnetem Schweißkopf der Schutzgasschweißanlage und mit einem Mitnehmerorgan,
- Figuren 8 bis 13: eine Seitenansicht auf die Bewegungsmittel mit daran angeordnetem Schweißkopf der Schutzgasschweißanlage und mit einem Mitnehmerorgan gemäß Figur 7 in unterschiedlichen Arbeitsstellungen und
- Figuren 14 und 15: eine Teil-Draufsicht auf die Bewegungsmittel gemäß Figur 7 in unterschiedlichen Positionen des Schweißkopfs der Schutzgasschweißanlage jeweils angepasst auf eine Steigung eines Drahts des Bewehrungskörpers.

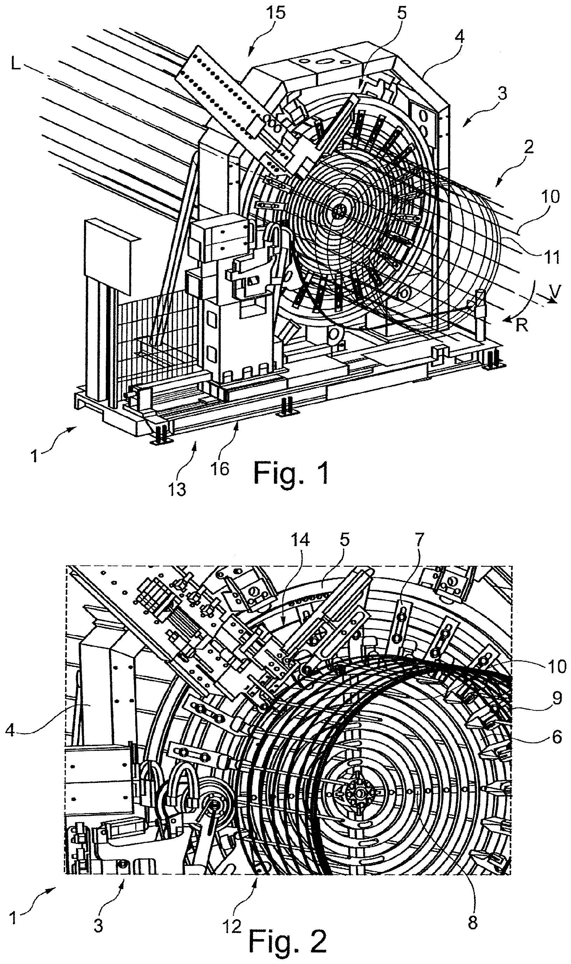

Eine Korbschweißmaschine 1 zur Herstellung eines Bewehrungskörpers in Form eines Bewehrungskorbs 2 umfasst ein Gestell 3 (Figuren 1, 2). Das Gestell 3 umfasst einen Rahmen 4 und ein Hauptrad 5. Das Hauptrad 5 ist am Rahmen 4, insbesondere in eine Rotationsrichtung R drehbeweglich vorhanden. Am Hauptrad 5 sind beispielsweise Ringelemente 6 vorhanden. Die Ringelemente 6 sind vorteilhafterweise in einem Durchmesser zueinander verschieden ausgebildet und zentrisch zu einem zentralen Mittelpunkt oder zu einer zentralen Längsachse L des Hauptrads 5, des Rahmens 4 und/oder des Gestells 3 am Hauptrad 5 angeordnet. Entlang der Ringelemente 6 sind Stellelemente 7 in radialer Richtung, senkrecht zu der Längsachse L positionierbar insbesondere verschieblich gelagert. Denkbar ist beispielsweise auch, dass das Hauptrad 5 Speichen 8 aufweist, entlang welcher Stellelemente in radialer Richtung, senkrecht zur Längsachse L positionierbar, insbesondere verschieblich vorhanden sind (nicht gezeigt). Des Weiteren ist ein Führungsrohr 9 am Stellelement 7 angeordnet, welches dazu vorgesehen ist, einen Stab, insbesondere einen Längsstab 10 des Bewehrungskorbs 2, insbesondere parallel zur Längsachse L zu führen. Das Hauptrad 5 dreht sich bei einem Herstellungsvorgang des Bewehrungskorbs 2 vorteilhafterweise, insbesondere in Vorschubrichtung V gesehen entgegen dem Uhrzeigersinn.

Ein Bewehrungskorb 2 umfasst einen Draht 11 und einen oder insbesondere mehrere Längsstäbe 10. Der Draht 11 erstreckt sich vorteilhafterweise spiralförmig um einen äußeren Umfang des Bewehrungskorbs 2. Das Hauptrad 5 ist vorteilhafterweise um die Längsachse L in einer Bewegungsebene drehbar am Rahmen 4 des Gestells 3 der Korbschweißmaschine 1 gelagert. Neben dem Gestell 3 umfasst die Korbschweißmaschine 1 vorteilhafterweise mindestens ein weiteres Nebengestell (nicht dargestellt), welches beispielsweise dazu vorgesehen ist, die Längsstäbe 10 des Bewehrungskorbs 2 in eine Vorschubrichtung V, welche vorteilhafterweise parallel zur Längsachse L ausgerichtet ist, zu transportieren.

Am Gestell 3 sind vorteilhafterweise ein Schweißkopf 12 einer Widerstandsschweißanlage 13 und ein Schweißkopf 14 einer Schutzgasschweißanlage 15 angeordnet. Die Widerstandschweißanlage 13 und die Schutzgasschweißanlage 15 umfassen weitere Komponenten, wie beispielsweise eine Elektronikeinheit, welche in den Figuren der Übersichtlichkeit halber nicht abgebildet sind.

Der Schweißkopf 12 der Widerstandsschweißanlage 13 ist am Gestell 3 vorteilhafterweise linearbeweglich vorhanden. Beispielsweise sind Bewegungsmittel in Form eine Schienensystems 16 am Gestell 3 ausgebildet, sodass der Schweißkopf in einer Richtung quer zur Längsachse L oder in einer ersten Ebene parallel zur Bewegungsebene des Hauptrads 5 beweglich ist. Hierdurch ist eine Position des Schweißkopfs 12 auf unterschiedliche Durchmesser des Bewehrungskorbs 2, insbesondere während eines Herstellungsvorgangs anpassbar.

Der Schweißkopf 14 der Schutzgasschweißanlage 15 ist in Förderrichtung V gesehen beispielsweise zwischen 12 Uhr und 3 Uhr, etwa auf 1 Uhr angeordnet (Figuren 1 und 2). Entgegen der Förderrichtung V gesehen ist der Schweißkopf 14 entsprechend beispielsweise zwischen 9 Uhr und 12 Uhr, etwa auf 11 Uhr vorhanden. Der Schweißkopf 12 der Widerstandsschweißanlage 13 ist in Förderrichtung V gesehen beispielsweise etwa auf 3 Uhr angeordnet und entgegen der Förderrichtung V gesehen ist der Schweißkopf 14 entsprechend beispielsweise auf etwa 9 Uhr vorhanden.

Die erste Ebene, in welcher der Schweißkopf 12 der Widerstandsschweißanlage 13 beweglich vorhanden ist, ist vorteilhafterweise in Vorschubrichtung V beabstandet zur Bewegungsebene des Hauptrads 5 vorhanden. Beispielsweise ist eines Fügeposition des Schweißkopfs 12 der Widerstandsschweißanlage 13 und eine Fügeposition des Schweißkopfs 14 der Schutzgasschweißanlage 15 in Vorschubrichtung V beabstandet zur Bewegungsebene des Hauptrads 5 vorhanden. Vorteilhafterweise ist ein senkrechter Abstand der Fügeposition des Schweißkopfs 14 der Schutzgasschweißanlage 15 zur Bewegungsebene des Hauptrads 5, insbesondere in jeder Position des Schweißkopfs 14 der Schutzgasschweißanlage 15 relativ zum Rahmen 4 bzw. zum Hauptrad 5 größer, als ein senkrechter Abstand der Fügeposition des Schweißkopfs 12 der Widerstandsschweißanlage 13 zur Bewegungsebene des Hauptrads 5. Der senkrechte Abstand der Fügepositionen der beiden Schweißköpfe 12, 14 zur Bewegungsebene des Hauptrads 5 erstreckt sich beispielsweise entlang, insbesondere parallel zur Längsachse L.

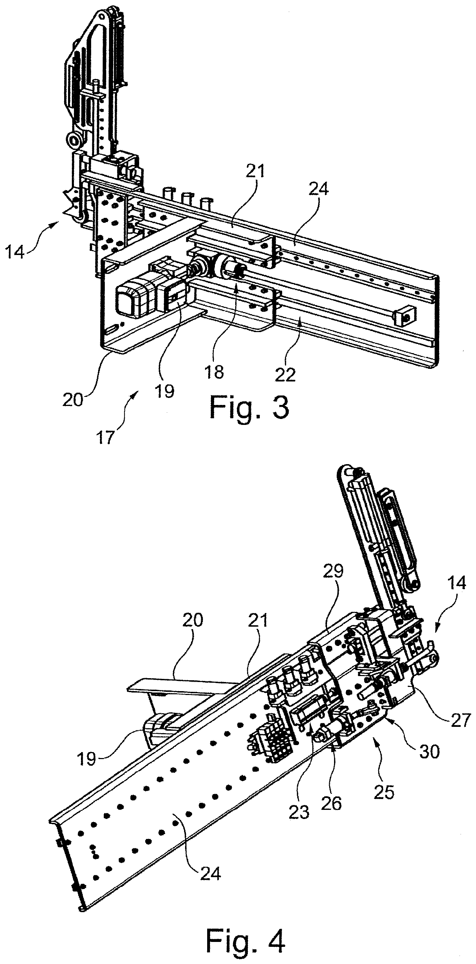

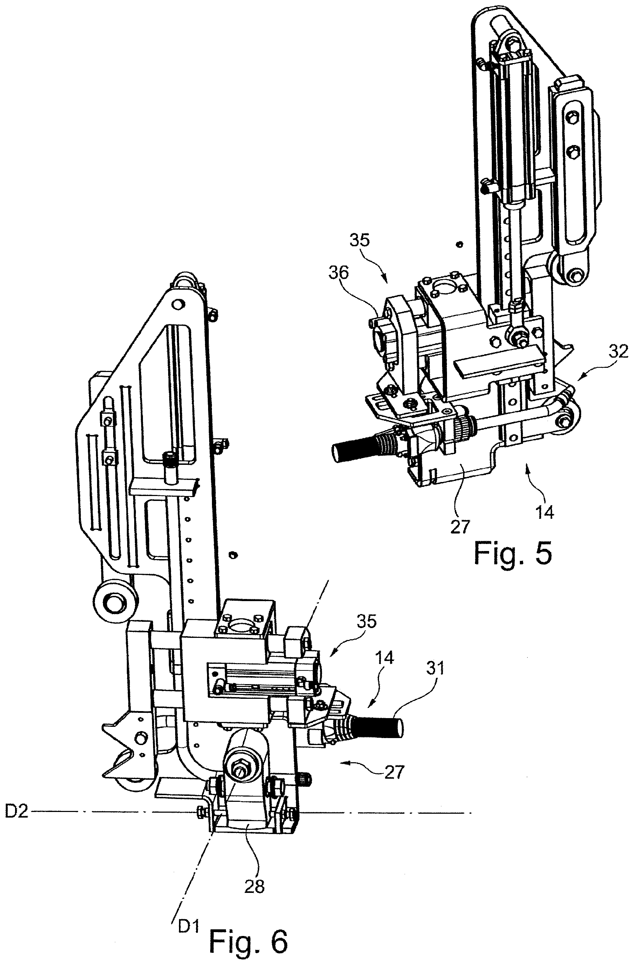

Die Korbschweißmaschine 1 umfasst vorteilhafterweise Bewegungsmittel 17 zur Bewegung des Schweißkopfs 14 der Schutzgasschweißmaschine 15 (Figuren 3 bis 6). Die Bewegungsmittel 17 umfassen eine Konsole 20 und eine Zwischenkonsole 21, welche relativ zur Konsole 20 beispielsweise beweglich an der Konsole 20 angeordnet ist. Weiter umfassen die Bewegungsmittel 17 eine Verstelleinheit 18, welche mittels eines beispielsweise elektrischen Antriebs 19 antreibbar ist. Durch die Verstelleinheit 18 ist eine Endkonsole 24 mittels einer Verschiebeeinheit 22 linearverschieblich zur Zwischenkonsole 21 vorhanden.

Vorteilhafterweise ist die Zwischenkonsole 21 um eine Achse relativ zur Konsole 20 schwenkbar, insbesondere drehbar, welche quer zu einer Verschieberichtung der Endkonsole 24 relativ zur Zwischenkonsole 21 ausgerichtet ist.

Weiter umfassen die Bewegungsmittel 17 beispielsweise einen insbesondere pneumatischen Antrieb 23, mittels welchem eine Ausrichteinheit 25 verschieblich, insbesondere linearverschieblich zur Endkonsole 24 antreibbar ist.

Mittels des Antriebs 19 ist der Schweißkopf 14 der Widerstandsschweißanlage 15 vorteilhafterweise vorpositionierbar und mittels des insbesondere pneumatischen Antriebs 23 ist der Schweißkopf 14 der Widerstandsschweißanlage 15 vorteilhafterweise vergleichsweise schnell an eine Fügestelle des Bewehrungskorbs 2 bringbar und/oder von der Fügestelle wegbewegbar.

Die Ausrichteinheit 25 ist vorteilhafterweise zweiteilig vorhanden. Die Ausrichteinheit 25 umfasst z.B. einen ersten Ausrichtteil 29, welcher verschieblich zur Endkonsole 24 an der Endkonsole 24 angeordnet ist und einen zweiten Ausrichtteil, einem Schweißkopfteil 27, welcher über ein Doppelgelenk 28 beweglich am ersten Ausrichtteil 29 gelagert ist.

Das Schweißkopfteil 27 ist beispielsweise mittels eines insbesondere pneumatischen Antriebs 26 relativ zum ersten Ausrichtteil 29 bewegbar. Vorteilhafterweise ist das Schweißkopfteil 27 mittels einer Führung 30 geführt bewegbar, sodass ein Bewegungsablauf, insbesondere eine beispielsweise einzige Bewegungsbahn des Schweißkopfteils 27 relativ zur Endkonsole 24 vorgegeben ist.

Mittels des Antriebs 26 und/oder mittels des Doppelgelenks 28 ist das Schweißkopfteil 27 in ein und/oder zwei Raumrichtungen bewegbar, insbesondere antreibar. Beispielsweise ist der Antrieb 26 über die Führung 30 mit dem Doppelgelenk 28 gekoppelt, insbesondere verbunden.

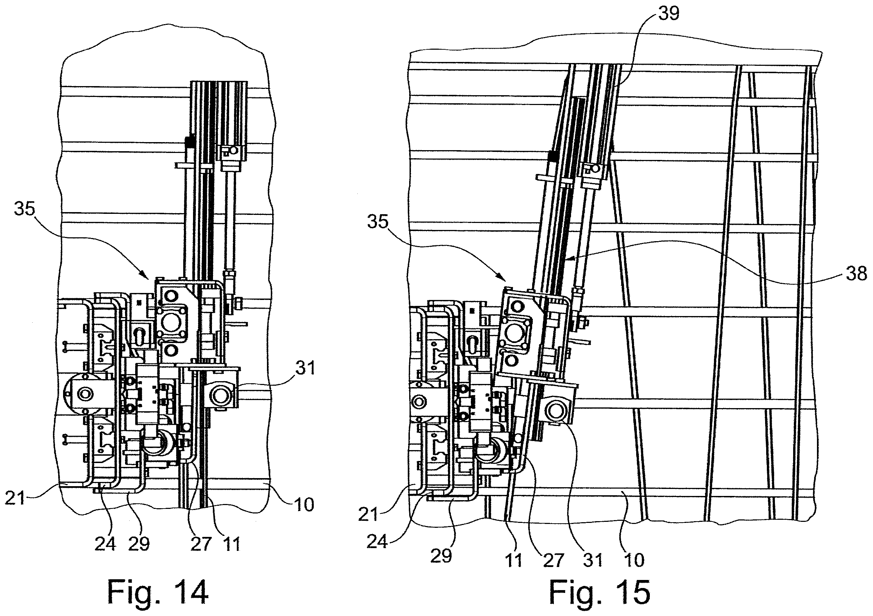

Vorteilhafterweise ist eine erste Drehachse D1 des Doppelgelenks 28 quer, insbesondere senkrecht zu einer Bewegungsebene der Endkonsole 24 und/oder des ersten Ausrichtteils 29 ausgerichtet. Vorteilhafterweise sind Drehachsen D1, D2 des Doppelgelenks 28 quer, insbesondere senkrecht zueinander ausgerichtet. Hierdurch ist das Schweißkopfteil 27 und damit insbesondere der Schweißkopf 14 entlang einer Bewegungsrichtung einer Fügestelle des Bewehrungskorbs 2 ausrichtbar, insbesondere entlang einer Steigung des Drahts 11 des Bewehrungskorbs 2 (siehe auch Figuren 14, 15). Das Doppelgelenk 28 ist vorteilhafterweise über die erste Drehachse D1 drehbeweglich am Schweißkopfteil 27 befestigt Das Doppelgelenk 28 ist beispielsweise über eine zweite Drehachse D2 schwenkbeweglich, insbesondere drehbeweglich mit der Endkonsole 24 verbunden. Hierdurch ist das Schweißkopfteil 27 relativ zur Endkonsole 24 vorteilhafterweise um eine erste Drehachse D1 drehbar und beispielsweise um eine zweite Drehachse D2 schwenkbar bzw. kippbar vorhanden.

Am Schweißkopfteil 27 ist der Schweißkopf 14 der Widerstandsschweißanlage 15 ausgebildet. Der Schweißkopf 14 umfasst ein Anschlusselement 31 mittels welchem der Schweißkopf 14 mit einer Zuleitung (nicht gezeigt) verbindbar ist. An einem dem Anschlusselement 31 gegenüberliegenden Ende umfasst der Schweißkopf 14 eine Schweißdüse 32. In der Schweißdüse 32 ist beispielsweise ein Schweißdraht (nicht gezeigt) für insbesondere ein Metall-Inertschweißverfahren geführt vorhanden.

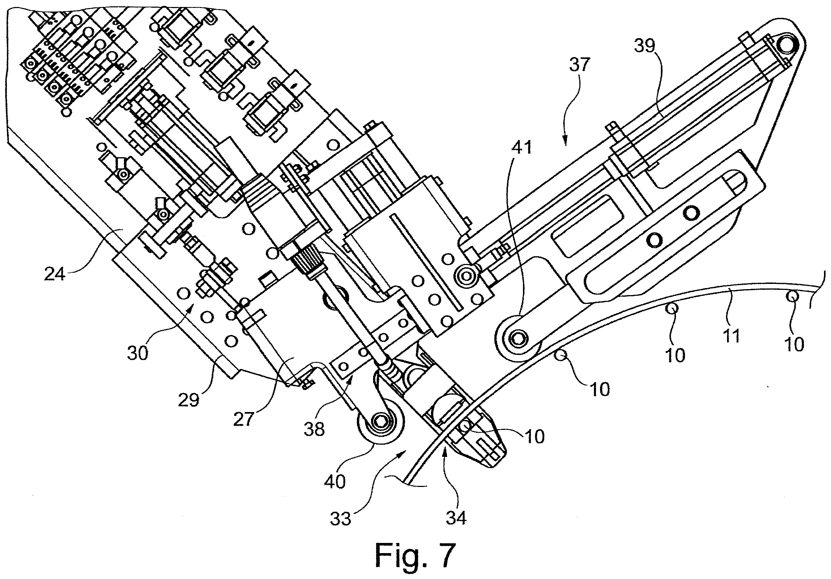

Weiterhin ist beispielsweise eine Mitnahmeeinheit 33 mit einem Mitnehmerorgan 34 vorhanden (Figur 7). Die Mitnahmeeinheit 33 umfasst vorteilhafterweise einen Antrieb (nicht dargestellt), mittels welchem das Mitnehmerorgan 34 beweglich, vorteilhafterweise linearbeweglich, vorhanden ist. Beispielsweise ist die Mitnahmeeinheit 33 an einer weiteren Antriebseinheit 35 angeordnet, insbesondere befestigt. Beispielsweise ist die Mitnahmeeinheit 33 schwenkbeweglich, insbesondere drehbeweglich an der Antriebseinheit 35 montiert. Die Antriebseinheit 35 umfasst beispielsweise einen pneumatischen Antrieb 36.

Beispielsweise ist der Schweißkopf 14 in zwei Bewegungsrichtungen, welche insbesondere quer zueinander, beispielsweise senkrecht zueinander, ausgerichtet sind, relativ zum Schweißkopfteil 27 bewegbar am Schweißkopfteil 27 angeordnet Der Schweißkopf 14 ist vorteilhafterweise mittels der weiteren Antriebseinheit 35 relativ zum Schweißkopfteil 27 linearbeweglich vorhanden. Weiter ist die Antriebseinheit 35 insbesondere zusammen mit dem Schweißkopf 14 in eine weitere Bewegungsrichtung beweglich, insbesondere linearbeweglich am Schweißkopfteil 27 angeordnet. Bevorzugterweise ist eine weitere Antriebseinheit 37 am Schweißkopfteil 27 vorhanden. Die Antriebseinheit 37 umfasst beispielsweise eine insbesondere schienenartige Linearführung 38 und einen beispielsweise pneumatischen Antrieb 39.

Das Schweißkopfteil 27 umfasst beispielsweise weiter Führungsrollen 40, 41, welche beispielsweise drehbeweglich am Schweißkopfteil 27 angeordnet sind. Eine erste Führungsrolle 40 ist beispielsweise positionsfest am Schweißkopfteil 27 insbesondere drehbeweglich befestigt. Eine zweite Führungsrolle 41 ist beabstandet zur ersten Führungsrolle 40 vorhanden. Ein Abstand der zweiten Führungsrolle 41 zur ersten Führungsrolle 40 ist beispielsweise einstellbar. Beispielsweise ist die zweite Führungsrolle 41 beispielsweise linearbeweglich einstellbar am Schweißkopfteil 27 angeordnet. Vorteilhafterweise ist die zweite Führungsrolle 41 in Richtung einer Bewegungsrichtung des Schweißkopfs 14 beweglich vorhanden. Beispielsweise ist die zweite Führungsrolle 41 parallelbeweglich zu einer Bewegung, welche durch die Antriebseinheit 37 verursacht ist, vorhanden.

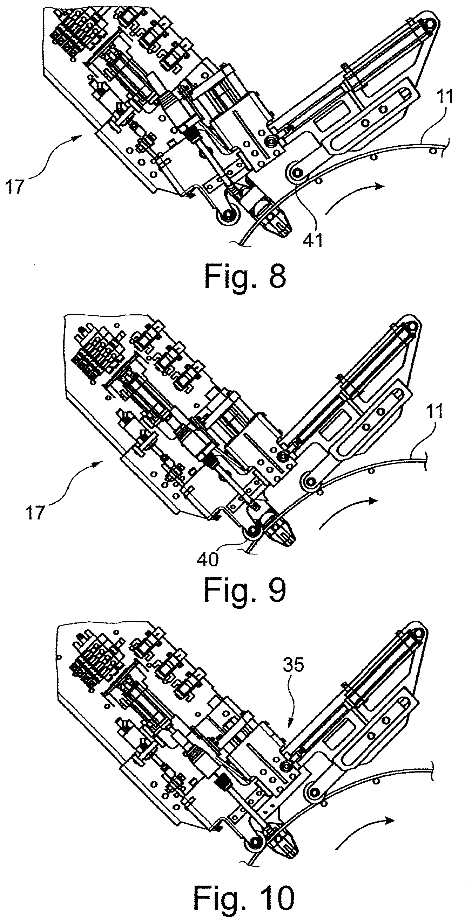

In den Figuren 8 bis 13 ist ein Bewegungsablauf des Schweißkopfs 14 der Schutzgasschweißanlage 15 dargestellt, auf welche im Folgenden eingegangen wird.

In Figur 8 ist eine Ausrichtung des Schweißkopfs 14 vor Beginn eines Schweißvorgangs dargestellt (Ausgangsposition). Die Bewegungsmittel 17 sind an den Draht 11 des Bewehrungskorbs 2 herangefahren, sodass die Führungsrolle 41 am Draht 11 anliegt. Der Bewehrungskorb 2 und damit der Draht 11 bewegt sich im Uhrzeigersinn. Das Mitnehmerorgan 34 ist an einen Stab 10 des Bewehrungskorbs 2 herangefahren und koppelt mit dem Stab 10, sodass die Bewegungsmittel 17 durch die Bewegung des Bewehrungskorbs 2, insbesondere durch die Drehbewegung des Bewehrungskorbs 2 um die Längsachse des Bewehrungskorbs 2, bewegbar sind.

In einem weiteren Schritt wird zunächst das Schweißkopfteil 27 mittels des Antriebs 26 an den Bewehrungskorb 2 heranbewegt. Im heranbewegten Zustand des Schweißkopfteils 27 ist die erste Führungsrolle 40 ebenfalls in Anlage mit dem Draht 11 (Figur 9). Anschließend oder ggf. auch gleichzeitig wird der Schweißkopf 14 an die Fügestelle herangefahren (Figur 10). Im vorliegenden Beispiel befindet sich die zu fügende Stelle im Anlagebereich des Drahts 11 mit dem Stab 10, welcher mit dem Mitnehmerorgan 34 koppelt. Der Schweißvorgang wird im herangefahrenen Zustand gestartet.

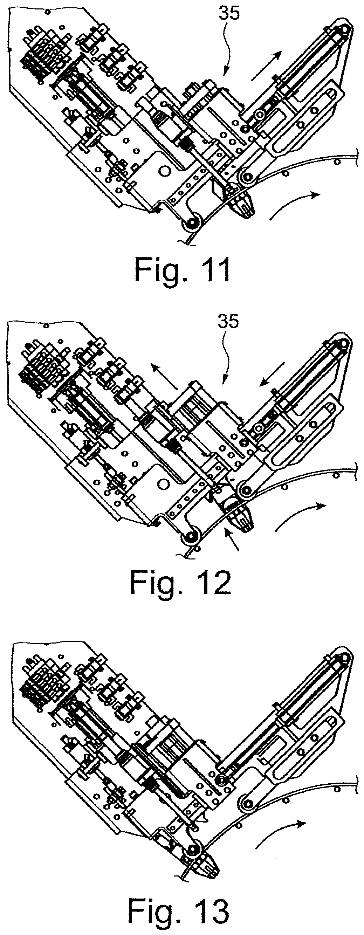

Aufgrund der Bewegung des Bewehrungskorbs 2 wird die Antriebseinheit 35 entlang der Linearführung 38 verschoben. Vorteilhafterweise wird während des Fügevorgangs gleichzeitig ein Abstand der Schweißdüse 32 zur Fügestelle mittels des Antriebs 36 reguliert, sodass dieser beispielsweise konstant bleibt (Figur 11).

Ist der Fügevorgang beendet wird der Schweißkopf 14 von der Fügestelle mittels des Antriebs 36 entfernt (Figur 12). Weiter wird das Mitnehmerorgan 34 vom Stab 10 gelöst und ebenfalls zurückgefahren (nicht abgebildet). Anschließend wird die Antriebseinheit 35 mittels des Antriebs 39 entlang der Linearführung 38 in die Ausgangsposition relativ zum Gestell 9 zurückbewegt, sodass anschließend beispielsweise ein weiterer Fügevorgang gestartet werden kann (Figur 13).

**Bezugszeichenliste**

| | | | |
|---|---|---|---|
| 1 | Korbschweißmaschine | 22 | Verschiebeeinheit |
| 2 | Bewehrungskorb | 23 | Antrieb |
| 3 | Gestell | 24 | Endkonsole |
| 4 | Rahmen | 25 | Ausrichteinheit |
| 5 | Hauptrad | 26 | Antrieb |
| 6 | Ringelement | 27 | Schweißkopfteil |
| 7 | Stellelement | 28 | Doppelgelenk |
| 8 | Speiche | 29 | Ausrichtteil |
| 9 | Führungsrohr | 30 | Führung |
| 10 | Längsstab | 31 | Anschlusselement |
| 11 | Draht | 32 | Schweißdüse |
| 12 | Schweißkopf | 33 | Mitnahmeeinheit |
| 13 | Widerstandsschweißanlage | 34 | Mitnehmerorgan |
| 14 | Schweißkopf | 35 | Antriebseinheit |
| 15 | Schutzgasschweißanlage | 36 | Antrieb |
| 16 | Schienensystem | 37 | Antriebseinheit |
| 17 | Bewegungsmittel | 38 | Linearführung |
| 18 | Verstelleinheit | 39 | Antrieb |
| 19 | Antrieb | 40 | Führungsrolle |
| 20 | Konsole | 41 | Führungsrolle |
| 21 | Zwischenkonsole | | |

## Patentansprüche

1. Korbschweißmaschine (1) zur Herstellung eines Bewehrungskörpers (2), wobei der Bewehrungskörper (2) eine Mehrzahl von Längsstäben (10) und einen Wickeldraht (11) aufweist, wobei die Korbschweißmaschine (1) bei Verwendung dazu ausgebildet ist, die Längsstäbe (10) mit dem Wickeldraht (11) bei der Herstellung des Bewehrungskörpers (2) zu verbinden, wobei die Korbschweißmaschine (1) eine zentrale Längsachse vorgibt und wobei die Korbschweißmaschine (1) bei Verwendung dazu ausgebildet ist, entlang der zentralen Längsachse die Längsstäbe (10) bei der Herstellung des Bewehrungskörpers (2) durch die Korbschweißmaschine (1) in eine Förderrichtung V zu bewegen, wobei die Korbschweißmaschine (1) ein Gestell aufweist, welches dazu ausgebildet ist, einen Abstand eines Längsstabs (10) relativ zur zentralen Längsachse vorzugeben, wobei das Gestell einen Rahmen (4) und ein Hauptrad (5) umfasst, wobei das Hauptrad (5) am Rahmen (4) drehbeweglich vorhanden ist,
**dadurch gekennzeichnet, dass**
die Korbschweißmaschine (1) eine Widerstandsschweißanlage (13) und eine Schutzgasschweißanlage (15) umfasst, wobei die Widerstandsschweißanlage (13) bei Verwendung dazu ausgebildet ist, den Wickeldraht (11) und einen Längsstab (10) des Bewehrungskörpers (2) miteinander zu verbinden, wobei die Schutzgasschweißanlage (15) bei Verwendung dazu ausgebildet ist, den Wickeldraht (11) und einen Längsstab (10) des Bewehrungskörpers (2) miteinander zu verbinden.

2. Korbschweißmaschine (1) nach einem der vorangegangenen Ansprüche, **dadurch gekennzeichnet, dass** die Korbschweißmaschine (1) bei Verwendung dazu ausgebildet ist, die Längsstäbe (10) des Bewehrungskörpers (2) während der Herstellung des Bewehrungskörpers (2) um die zentrale Längsachse der Korbschweißmaschine (1) zu drehen.

3. Korbschweißmaschine (1) nach einem der vorangegangenen Ansprüche, **dadurch gekennzeichnet, dass** die Korbschweißmaschine (1) bei Verwendung dazu ausgebildet ist, mit der Widerstandsschweißanlage (13) und mit der Schutzgasschweißanlage (15) zeitgleich der Wickeldraht (11) mit einem Längsstab (10) des herzustellenden Bewehrungskörpers (2) zu verbinden.

4. Korbschweißmaschine (1) nach einem der vorangegangenen Ansprüche, **dadurch gekennzeichnet, dass** in eine Bewegungsrichtung eines Drahts (11) und/oder in die Förderrichtung der Längsstäbe (10) gesehen, die Schutzgasschweißanlage (15) hinter der Widerstandsschweißanlage (13) an der Korbschweißmaschine (1) angeordnet ist.

5. Korbschweißmaschine (1) nach einem der vorangegangenen Ansprüche, **dadurch gekennzeichnet, dass** die Schutzgasschweißanlage (15) und die Widerstandsschweißanlage (13) derart an der Korbschweißmaschine (1) angeordnet sind, dass eine zu bearbeitende Position des Bewehrungskörpers (2) zunächst durch die Schutzgasschweißanlage (15) bearbeitbar ist und nachfolgend durch die Widerstandsschweißanlage (13).

6. Korbschweißmaschine (1) nach einem der vorangegangenen Ansprüche, **dadurch gekennzeichnet, dass** die Korbschweißmaschine (1) Bewegungsmittel (16, 17) umfasst, sodass der Schweißkopf (14) der Schutzgasschweißanlage (15) und/oder der Schweißkopf (12) der Widerstandsschweißanlage (13) einer Bewegung des Drahts (11) und/oder einer Bewegung des Stabs (10) des herzustellenden Bewehrungskörpers (2) folgen kann.

7. Korbschweißmaschine (1) nach einem der vorangegangenen Ansprüche, **dadurch gekennzeichnet, dass** die Schutzgasschweißanlage (15) ein Mitnehmerorgan (34) aufweist, wobei die Schutzgasschweißanlage (15) zum Verbinden von zwei Elementen des Bewehrungskörpers (2) mit dem Mitnehmerorgan (34) bei Verwendung an einem Stab (10) ansteht, sodass eine Bewegung des Stabs (10) eine Bewegung des Mitnehmerorgans (34) bewirkt.

8. Korbschweißmaschine (1) nach einem der vorangegangenen Ansprüche, **dadurch gekennzeichnet, dass** die Schutzgasschweißanlage (15) in alle drei Raumrichtungen bewegbar an der Korbschweißmaschine (1) gelagert ist.

9. Korbschweißmaschine (1) nach dem vorangegangenen Anspruch 6, **dadurch gekennzeichnet, dass** ein Bewegungsmittel als ein Roboterarm vorhanden ist, wobei der Roboterarm bei Verwendung dazu ausgebildet ist, einen Schweißkopf (14) der Schutzgasschweißanlage (15) einer Bewegung des Drahts (11) und/oder des Stabs (10) des herzustellenden Bewehrungskörpers (2) nach zu führen.

10. Korbschweißmaschine (1) nach einem der vorangegangenen Ansprüche, **dadurch gekennzeichnet, dass** der Schweißkopf (12) der Widerstandsschweißanlage (13) in Förderrichtung V gesehen auf ca. 3 Uhr oder auf ca. 9 Uhr um die Längsachse herum an der Korbschweißmaschine (1) angeordnet ist.

11. Korbschweißmaschine (1) nach einem der vorangegangenen Ansprüche, **dadurch gekennzeichnet, dass** der Schweißkopf (14) der Schutzgasschweißanlage (15) in Förderrichtung gesehen zwischen 12 Uhr und 3 Uhr oder zwischen 9 Uhr und 12 Uhr um die Längsachse herum an der Korbschweißmaschine (1) angeordnet ist.

## Claims

1. Cage welding machine (1) for producing a reinforcing body (2), wherein the reinforcing body (2) has a plurality of longitudinal rods (10) and a winding wire (11), wherein, when in use, the cage welding machine (1) is configured to connect the longitudinal rods (10) to the winding wire (11) during the production of the reinforcing body (2), wherein the cage welding machine (1) predefines a central longitudinal axis, and wherein, when in use, the cage welding machine (1) is configured to move the longitudinal rods (10) along the central longitudinal axis through the cage welding machine (1) in a conveying direction V during the production of the reinforcing body (2), wherein the cage welding machine (1) has a mount which is configured to predefine a spacing of a longitudinal rod (10) relative to the central longitudinal axis, wherein the mount comprises a frame (4) and a main wheel (5), wherein the main wheel (5) is provided in a rotatably movable manner on the frame (4),
**characterized in that**
the cage welding machine (1) comprises a resistance welding system (13) and an inert gas welding system (15), wherein, when in use, the resistance welding system (13) is configured to connect the winding wire (11) and a longitudinal rod (10) of the reinforcing body (2) to one another, wherein, when in use, the inert gas welding system (15) is configured to connect the winding wire (11) and a longitudinal rod (10) of the reinforcing body (2) to one another.

2. Cage welding machine (1) according to one of the preceding claims, **characterized in that**, when in use, the cage welding machine (1) is configured to rotate the longitudinal rods (10) of the reinforcing body (2) about the central longitudinal axis of the cage welding machine (1) during the production of the reinforcing body (2).

3. Cage welding machine (1) according to either of the preceding claims, **characterized in that**, when in use, the cage welding machine (1) is configured to connect the winding wire (11) to a longitudinal rod (10) of the reinforcing body (2) to be produced simultaneously by way of the resistance welding system (13) and by way of the inert gas welding system (15).

4. Cage welding machine (1) according to one of the preceding claims, **characterized in that**, as seen in a movement direction of a wire (11) and/or in the conveying direction of the longitudinal rods (10), the inert gas welding system (15) is arranged behind the resistance welding system (13) on the cage welding machine (1).

5. Cage welding machine (1) according to one of the preceding claims, **characterized in that** the inert gas welding system (15) and the resistance welding system (13) are arranged on the cage welding machine (1) in such a way that a position of the reinforcing body (2) that is to be processed is able to be processed firstly by the inert gas welding system (15) and subsequently by the resistance welding system (13).

6. Cage welding machine (1) according to one of the preceding claims, **characterized in that** the cage welding machine (1) comprises movement means (16, 17) such that the welding head (14) of the inert gas welding system (15) and/or the welding head (12) of the resistance welding system (13) can follow a movement of the wire (11) and/or a movement of the rod (10) of the reinforcing body (2) to be produced.

7. Cage welding machine (1) according to one of the preceding claims, **characterized in that** the inert gas welding system (15) has a driver member (34), wherein the inert gas welding system (15), for connecting two elements of the reinforcing body (2), rests by way of the driver member (34), when in use, against a rod (10) such that a movement of the rod (10) brings about a movement of the driver member (34) .

8. Cage welding machine (1) according to one of the preceding claims, **characterized in that** the inert gas welding system (15) is mounted on the cage welding machine (1) so as to be movable in all three spatial directions.

9. Cage welding machine (1) according to preceding Claim 6, **characterized in that** a movement means is provided in the form of a robot arm, wherein, when in use, the robot arm is configured to cause a welding head (14) of the inert gas welding system (15) to follow a movement of the wire (11) and/or of the rod (10) of the reinforcing body (2) to be produced.

10. Cage welding machine (1) according to one of the preceding claims, **characterized in that** the welding head (12) of the resistance welding system (13), as seen in the conveying direction V, is arranged on the cage welding machine (1) at approximately 3 o'clock or at approximately 9 o'clock around the longitudinal axis.

11. Cage welding machine (1) according to one of the preceding claims, **characterized in that** the welding head (14) of the inert gas welding system (15), as seen in the conveying direction, is arranged on the cage welding machine (1) between 12 o'clock and 3 o'clock or between 9 o'clock and 12 o'clock around the longitudinal axis.

## Revendications

1. Cageuse (1) pour la fabrication d'un corps d'armature (2), le corps d'armature (2) présentant une pluralité de barres longitudinales (10) et un fil d'enroulement (11), la cageuse (1) étant configurée, lors de l'utilisation, pour relier les barres longitudinales (10) au fil d'enroulement (11) lors de la fabrication du corps d'armature (2), la cageuse (1) définissant un axe longitudinal central et la cageuse (1) étant configurée, lors de l'utilisation, pour déplacer le long de l'axe longitudinal central les barres longitudinales (10) à travers la cageuse (1) dans une direction de transport V lors de la fabrication du corps d'armature (2), la cageuse (1) présentant un bâti, qui est configuré pour définir une distance d'une barre longitudinale (10) par rapport à l'axe longitudinal central, le bâti comprenant un cadre (4) et une roue principale (5), la roue principale (5) étant présente sur le cadre (4) de manière mobile en rotation, **caractérisée en ce que**
la cageuse (1) comprend une installation de soudage par résistance (13) et une installation de soudage sous gaz protecteur (15), l'installation de soudage par résistance (13) étant configurée, lors de l'utilisation, pour relier entre eux le fil d'enroulement (11) et une barre longitudinale (10) du corps d'armature (2), l'installation de soudage sous gaz protecteur (15) étant configurée, lors de l'utilisation, pour relier entre eux le fil d'enroulement (11) et une barre longitudinale (10) du corps d'armature (2).

2. Cageuse (1) selon l'une quelconque des revendications précédentes, **caractérisée en ce que** la cageuse (1) est configurée, lors de l'utilisation, pour faire tourner les barres longitudinales (10) du corps d'armature (2) autour de l'axe longitudinal central de la cageuse (1) lors de la fabrication du corps d'armature (2) .

3. Cageuse (1) selon l'une quelconque des revendications précédentes, **caractérisée en ce que** la cageuse (1) est configurée, lors de l'utilisation, pour relier simultanément le fil d'enroulement (11) à une barre longitudinale (10) du corps d'armature (2) à produire avec l'installation de soudage par résistance (13) et avec l'installation de soudage sous gaz protecteur (15).

4. Cageuse (1) selon l'une quelconque des revendications précédentes, **caractérisée en ce que**, vu dans une direction de déplacement d'un fil (11) et/ou dans la direction de transport des barres longitudinales (10), l'installation de soudage sous gaz protecteur (15) est agencée sur la cageuse (1) derrière l'installation de soudage par résistance (13).

5. Cageuse (1) selon l'une quelconque des revendications précédentes, **caractérisée en ce que** l'installation de soudage sous gaz protecteur (15) et l'installation de soudage par résistance (13) sont agencées sur la cageuse (1) de telle sorte qu'une position à usiner du corps d'armature (2) peut être usinée d'abord par l'installation de soudage sous gaz protecteur (15) et ensuite par l'installation de soudage par résistance (13).

6. Cageuse (1) selon l'une quelconque des revendications précédentes, **caractérisée en ce que** la cageuse (1) comprend des moyens de déplacement (16, 17) de telle sorte que la tête de soudage (14) de l'installation de soudage sous gaz protecteur (15) et/ou la tête de soudage (12) de l'installation de soudage par résistance (13) peut suivre un déplacement du fil (11) et/ou un déplacement de la barre (10) du corps d'armature (2) à fabriquer.

7. Cageuse (1) selon l'une quelconque des revendications précédentes, **caractérisée en ce que** l'installation de soudage sous gaz protecteur (15) présente un organe d'entraînement (34), l'installation de soudage sous gaz protecteur (15) étant destinée à relier deux éléments du corps d'armature (2) à l'organe d'entraînement (34) lors de l'utilisation sur une barre (10), de telle sorte qu'un déplacement de la barre (10) provoque un déplacement de l'organe d'entraînement (34).

8. Cageuse (1) selon l'une quelconque des revendications précédentes, **caractérisée en ce que** l'installation de soudage sous gaz protecteur (15) est montée sur la cageuse (1) de manière mobile dans les trois directions de l'espace.

9. Cageuse (1) selon la revendication 6 précédente, **caractérisée en ce qu'**un moyen de déplacement est présent sous la forme d'un bras de robot, le bras de robot étant configuré, lors de l'utilisation, pour guider une tête de soudage (14) de l'installation de soudage sous gaz protecteur (15) en fonction d'un déplacement du fil (11) et/ou de la barre (10) du corps d'armature (2) à fabriquer.

10. Cageuse (1) selon l'une quelconque des revendications précédentes, **caractérisée en ce que** la tête de soudage (12) de l'installation de soudage par résistance (13) est agencée sur la cageuse (1) à environ 3 heures ou à environ 9 heures autour de l'axe longitudinal, vu dans la direction de transport V.

11. Cageuse (1) selon l'une quelconque des revendications précédentes, **caractérisée en ce que** la tête de soudage (14) de l'installation de soudage sous gaz protecteur (15) est agencée sur la cageuse (1) entre 12 heures et 3 heures ou entre 9 heures et 12 heures autour de l'axe longitudinal, vu dans la direction de transport.
